# EUROPÄISCHE PATENTSCHRIFT

(11) **EP 0 466 948 B1**
(45) Veröffentlichungstag und Bekanntmachung des Hinweises auf die Patenterteilung: **31.01.1996**
(21) Anmeldenummer: 90113584.8
(22) Anmeldetag: 16.07.1990
(51) Int. Cl.: G06F 9/46, H04Q 3/545, G06F 15/16

(54) **Kommunikationssystem mit einem der zentralen Steuerung dienenden Multiprozessorsystem**
Communications system with a multi-processor system serving as the central control
Système de communication avec un système multiprocesseur servant comme contrôle central

(43) Veröffentlichungstag der Anmeldung: 22.01.1992
(73) Patentinhaber: SIEMENS AKTIENGESELLSCHAFT, D-80333 München (DE)
(72) Erfinder: Clark, Mark, W-8000 München (DE); Siegmund, Wolfgang, Dr. Dipl.-Phys., W-8000 München 60 (DE); Wunderlich, Hans-Dieter, Dr., W-8000 München 71 (DE)

(56) Entgegenhaltungen:
- EP-A- 0 274 715
- EP-A- 0 362 903
- US-A- 4 073 005

## Beschreibung

Die Erfindung betrifft ein Verfahren gemäß Oberbegriff des Patentanspruchs 1.

Im Zuge der Entwicklung von immer komplexer werdenden Datenverarbeitungssysteme/Kommunikationssysteme fand eine Erweiterung der bis dahin verwendeten Monoprozessorsysteme zu Multiprozessorsystemen statt. Im Gegensatz zu Monoprozessorsystemen, wo Daten/Meldungen sequentiell bearbeitet werden, wird bei Multiprozessorsystemen eine parallele Bearbeitung erreicht. Die so entstandenen Systeme besitzen gegenüber den Monoprozessorsystemen enorme Vorteile, wie das Beispiel der drastischen Erhöhung der Verarbeitungsgeschwindigkeit zeigt. So wird die parallele Bearbeitung mehrerer Aufgaben dadurch erreicht, daß eine zu bearbeitende Aufgabe in mehrere Teilaufgaben aufgeteilt wird, wobei ein Mikroprozessor je eine Teilaufgabe bearbeitet, und anschließend die Teilergebnisse wieder zu einem Gesamtergebnis zusammensetzt werden. Die Bearbeitung der Teilaufgaben erfolgt durch auf den einzelnen Prozessoren ablaufende Prozesse. Dabei kann eine Aufgabe/Teilaufgabe aus unterschiedlichen funktionellen Organisationsabläufen im System bestehen. Somit bearbeitet ein auf einem Prozessor ablaufender Prozeß Aufgaben/ Teilaufgaben von z.B. Fehlerbehandlungsprozeduren, Zeitüberwachungsprozeduren oder Prozeduren der Vermittlungstechnik. Zwei oder mehrere Prozesse können aber nicht gleichzeitig eine Teilaufgabe bearbeiten. Dies wird durch eine Prozeßüberwachung im Betriebssystem gesteuert. Problematisch ist jedoch, daß verschiedene Prozesse gleichzeitig auf ein Speicherregister zugreifen und dadurch undefinierte Zustände hervorrufen können. In der europäischen Patentanmeldung 0 274 715 A3 ist eine Methode beschrieben, wie ein gleichzeitiger Zugriff zweier Prozesse auf ein Speicherregister verhindert werden kann. Die dort beschriebene SECURE-Prozedur verhindert durch Eintrag einer Prozessornummer in den betreffenden Speicherregistern den gleichzeitigen Zugriff eines ersten Prozesses und eines konkurrierenden, zweiten Prozesses auf dieses Speicherregister. Dies geschieht dadurch, daß der konkurrierende, zweite Prozeß erst dann die Speicherinhalte eines Speicherregisters verändert, wenn dort eine Prozessornummer eingetragen ist. Andernfalls entspricht diese dem momentanen Zugriff eines früheren, ersten Prozesses auf jenes Speicherregister und der konkurrierende zweite Prozeß wird in eine Warteschlange hinter dem ersten Prozeß eingereiht. Sobald dessen Zugriff beendet ist, darf nun der konkurrierende, zweite sich in der Warteschlange befindliche Prozeß auf dieses Speicherregister zugreifen. Ein gleichzeitiger Zugriff zweier Prozesse auf ein Speicherregister ist damit verhindert.

In einem Kommunikationssystem sind alle Prozesse einer hierarchischen Organisationsstruktur unterworfen. Dies wird durch eine Priorisierung des Prozeßablaufes erreicht. So kann z.B. ein höher priorisierter Prozeß einen niedriger priorisierten Prozeß jederzeit unterbrechen. Hat der höher priorisierte Prozeß seine Aufgabe beendet, kann der niedriger priorisierte Prozeß die Bearbeitung seiner ursprünglichen Aufgabe fortsetzen. Solche hoch priorisierten Prozesse sind in Kommunikationssystemen üblicherweise Prozesse zur Fehlerbehandlung, Zeitüberwachung etc. Dies bedeutet jedoch, daß ein eine Aufgabe bearbeitende Prozeß in seinem zeitlichen Ablauf durch einen höher priorisierten Prozeß deutlich verzögert werden kann. Problematisch ist dies insbesondere überall dort, wo die Reihenfolge der Teilaufgaben unbedingt eingehalten werden muß.

Ein solcher Zustand ist unter allen Umständen zu vermeiden; daher bricht das Kommunikationssystem in diesem Fall die entsprechende Verbindung ab. Eine Möglichkeit, hier Abhilfe zu schaffen besteht in der Verwendung von bereits bekannten Quittungs-verfahren ("Handshaking"). Diese Verfahren sind zwar für Daten-verarbeitungssysteme anwendbar, da hier im ungünstigsten Fall der Anwender (Programmierer) einige 100 Millisekunden warten muß. Bei modernen Kommunikationssystemen würde jedoch der Einsatz solcher Verfahren zu einer derart hohen Belastung des zentralen Bussystems sowie der entsprechenden Prozessoren führen, daß die daraus resultierenden zeitlichen Verzögerungen nicht mehr zu tolerieren wären.

Der Erfindung liegt die Aufgabe zugrunde, das eingangs definierte Kommunikationssystem derart auszugestalten, daß die Bearbeitung von Aufgaben in der richtigen Reihenfolge koordiniert wird und dabei zeitliche Verzögerungen größeren Ausmaßes vermieden werden. Die Aufgabe wird erfindungsgemäß durch die im Kennzeichen des Patentanspruchs 1 genannten Merkmale gelöst.

Wesentlich für die Erfindung ist die Einführung der Holding Tabelle. Das exklusive Sperren des zentralen Bussystems durch einen Prozessor für die Dauer eines Zugriffs auf die Holding Tabelle bedeutet keine Einschränkung des Dynamikverlustes des Multiprozessorsystems. Die Holdingprozedur koordiniert somit die Aufgaben innerhalb des Systems. Der Zeitvorteil, der durch die parallele Bearbeitung von Aufgaben durch unterschiedliche Prozessoren erreicht wird, ist ungleich größer, als der geringfügige Zeitverlust, der durch die Koordinierungsvorgänge selbst (z.B. Sperren des zentralen Bussystems, Einreihen von Prozessen in Warteschlangen etc.) entsteht.

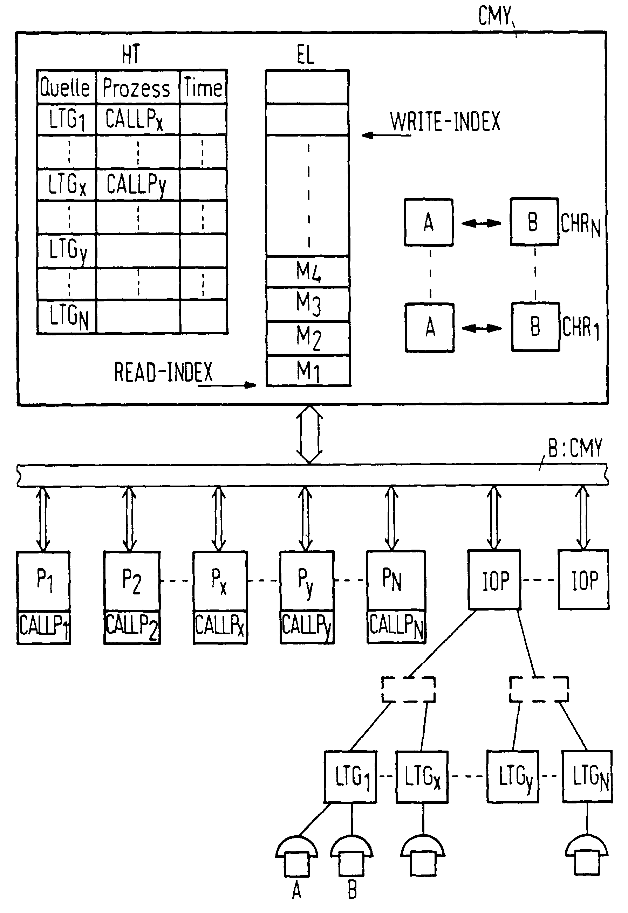

Die Erfindung wird im folgenden anhand eines Ausführungsbeispiels näher erläutert. FIG 1 zeigt ein modular strukturiertes Multiprozessorsystem, das dezentrale Prozessoreinheiten eines Kommunikationssystems koordiniert. Das Multiprozessorsystem besteht aus
- einem zentralen Systembus B:CMY
- mehreren daran angeschlossenen Prozessoreinheiten P₁ ...Pₙ
- mehreren Input/Output-Prozessoren IOP, wobei an wenigstens einen dieser Input/Output-Prozessoren IOP mehrere Anschlußbaugruppen LTG ... LTGₙ angeschlossen sind
- aus einem für alle Einheiten des Multiprozessorsystems gemeinsamen, an den zentralen Systembus angeschlossenen Speichersystem CMY.

Die prinzipielle Funktionsweise läßt sich anhand einer Verbindung zwischen zwei Teilnehmern A, B näher erläutern. Dabei sind beide Teilnehmer jeweils an eine der Anschlußbaugruppen LTG₁ ... LTGₙ angeschlossen. Für den Verbindungsaufbau/Verbindungsabbau zwischen zwei Teilnehmern A, B werden vier unterschiedliche Meldungen M₁ ... M₄ benötigt:
- M₁:: SEIZURE (Aufheben)
- M₂:: Digit Block (Wählen)
- M₃:: SETUP (Verbindungsaufbau im Koppelfeld, Anläuten B-Teilnehmer etc.)
- M₄:: RELEASE (Auflegen).

Die Meldungen werden nach dem FIFO-Prinzip in einer sich im gemeinsamen Speichersystem CMY befindlichen Eingabeliste EL abgelegt, und auf den den Prozessoren P₁ ... Pₙ zugeordneten Prozessen CALLP₁ ...CALLPₙ abgearbeitet. Weiterhin sind einer Verbindung sogenannte Channelregister CHR₁ ... CHRₙ zugeordnet; darin sind Parameter über den jeweiligen Zustand einer Verbindung abgelegt (z.B. an welche Anschlußbaugruppe LTGₓ der Teilnehmer angeschlossen ist, oder welches Koppelfeld in den Verbindungsweg miteinbezogen ist).

Zur Erläuterung seien die Teilnehmer A, B an die Anschlußbaugruppe LTGₓ angeschlossen. Der A-Teilnehmer hebt den Hörer seines Endgerätes ab. Er teilt dadurch dem Kommunikationssystem einen Verbindungswunsch zu einem bis dahin noch nicht bekannten B-Teilnehmer mit. Das Abheben des Hörers veranlaßt das System, die entsprechende Meldung M₁ in zu diesem Zwecke vorgesehene, sich im gemeinsamen Speichersystem CMY befindende Eingabeliste EL einzuschreiben. Anschließend versucht der A-Teilnehmer die Nummer des B-Teilnehmers anzuwählen. Dies veranlaßt das System, eine entsprechende Meldung M₂ in die Eingabeliste EL einzuschreiben. Ein analoges Vorgehen erfolgt bei den Meldungen M₃, M₄ dieser Verbindung sowie den Meldungen anderer Verbindungen. Ferner befinden sich alle den Prozessoren P₁ ...Pₙ zugeordnete Prozesse CALLP₁ ... CALLPₙ im aktiven oder passiven Zustand, je nachdem ob entsprechende Verbindungswünsche seitens der Teilnehmer bestehen. Ein Prozeß wird nach erfolgter Bearbeitung einer Meldung bei dem Betriebssystem zurück gemeldet. Das Betriebssystem weist dem frei gewordenen Prozeß die Bearbeitung einer neuen Meldung zu. Im Ausführungsbeispiel soll dies die Meldung M₁ sein; dies bedeutet, daß M₁ von dem Prozeß CAllPₓ bearbeitet wird. Ein zweiter freigewordener Prozeß CAllP_{y} soll zur gleichen Zeit die Meldung M₂ bearbeiten. Ein weiterer höher priorisierter Prozeß kann nun beispielsweise den Prozeß CAllPₓ unterbrechen. Dies bedeutet, daß das Ergebnis der Meldung M₁ erst entsprechend später in den relevanten Speicherregistern (z.B. dem Channelregister) abgelegt werden kann. Dies hat zur Folge, daß die ursprünglich nach dem FIFO Prinzip in der Eingabeliste EL abgelegten Meldungen M₁...Mₙ nach ihrer Bearbeitung nun in umgekehrter Reihenfolge in den entsprechenden Speicherregistern abgelegt sind. Diese Reihenfolge ist aber Grundlage für weitere Bearbeitungen; sie stellt nun aber in vielen Fällen eine in sich nicht mehr logische Meldungsreihenfolge mehr dar. So ist z.B. der Verbindungsaufbau dadurch charakterisiert, daß einer Meldung M₁ (Abheben des Hörers) eine Meldung M₂ (Wählen) folgt. Eine Umkehrung dieser Reihenfolge widerspricht jedoch dem logischen Aufbau eines Verbindungsaufbaus, was an sich zum sofortigen Abbruch dieser Verbindung führt. Ein solcher Abbruch kann mit Hilfe der sich im gemeinsamen Speichersystem CMY befindenden Holding Tabelle HT vermieden werden.
Die Meldungen M₁ ... Mₙ einer Verbindung von einer Quelle LTGₓ sind dabei im Hinblick auf mögliche zeitliche Verzögerungen besonders betroffen, da hier das unmittelbare Aufeinanderfolgen zweier Meldungen der Eingabeliste EL eine größere Wahrscheinlichkeit der Umkehrung der Reihenfolge nach sich zieht.

Jeder gerade aktivierte Prozeß CALLPₓ muß daher, bevor er eine Meldung Mₓ bearbeitet, die Herkunft der Meldung, also in diesem Fall die Anschlußbaugruppe LTGₓ verifizieren. Dies geschieht durch Analyse des den Herkunftsort enthaltenen Meldungskopfes der entsprechenden Meldung. Anschließend trägt der betreffende, gerade aktivierte Prozeß CALLPₓ das Kennzeichen der Quelle der Meldung in die Holding Tabelle HT ein. Der Eintrag erfolgt nur in dem Fall, wenn in dem Moment gerade keine andere Meldung derselben Quelle bearbeitet wird, also kein Kennzeichen derselben Quelle in der Holding Tabelle HT steht. Andernfalls übernimmt der betreffende Prozeß CALLPₓ die Bearbeitung der in der Eingabeliste EL stehenden nächsten Meldung. Ist jedoch kein Kennzeichen derselben Quelle enthalten, so beschreibt der betreffende Prozeß CALLPₓ noch zusätzlich die Holding-Tabelle HT mit seinem eigenen prozeßspezifischen Kennzeichen sowie einem Zeitüberwachungsparameter, auf die an späterer Stelle noch näher eingegangen wird. Nach erfolgter Bearbeitung der Meldung Mₓ löscht der Prozeß CALLPₓ das Kennzeichen der Quelle in der Holding Tabelle HT, womit nun ein weiterer gerade aktivierter Prozeß CALLP_{y} eine Meldung My derselben Quelle LTGₓ bearbeiten kann.

Durch dieses Verfahren ist sichergestellt, daß immer nur eine Meldung einer Quelle bearbeitet wird und demzufolge eine Umkehrung der Reihenfolge von bearbeiteten Meldungen, verhindert wird.

Die Eingabeliste EL ist in einem reservierten Speicherbereich des Speichersystems CMY abgelegt. Der Anfang wird durch ein Lesezeichen READ - INDEX, das Ende durch ein Schreibzeichen WRITE-INDEX markiert. Das Lesezeichen wird von dem Prozeß CALLPₓ zum Bearbeiten der Meldung Mₓ benutzt und wird nur dann erhöht, wenn eine Meldung Mₓ durch den Prozeß CALLPₓ ausgelesen wird. Beim "vorgreifenden" Lesen aufgrund der Holdingprozedur bleibt das Lesezeichen unverändert.

Aus dem oben Gesagten geht hervor, daß aufgrund der Holding-prozedur somit "Löcher" in der Eingabeliste EL entstehen können. Sie kann also zwischen dem Lese- und dem Schreibzeichen Meldungen und leere Listenelemente in beliebiger Reihenfolge aufweisen. Zeigt nun das Lesezeichen READ - INDEX auf ein leeres Listenelement, obwohl noch weitere Meldungen vorhanden sind sowie das Schreibzeichen WRITE - INDEX noch nicht eingeholt ist, wird das Lesezeichen READ - INDEX solange erhöht, bis ein nicht leeres Listenelement (also eine Meldung) vorgefunden wird.

Um einen gleichzeitigen Zugriff zweier Prozesse CALLPₓ und CALLP_{y} auf den das Kennzeichen der Quelle enthaltenden Speicherplatz in der Holding-Tabelle HT zu vermeiden, sperrt der als erster zugreifende Prozeß für die Dauer seines Zugriffs das zentrale Bussystem B:CMY. Damit wird der Zugriff aller anderen am zentralen Bussystem B:CMY angeschlossenen Einrichtungen auf dasselbe blockiert. Das Sperren des zentralen Bussystems B:CMY erfolgt durch einen für diesen Zweck vorgesehenen Prozessorbefehl.

Im Falle, daß einer der Prozessoren P₁ ... Pₙ ausfällt, hat dies unmittelbare Auswirkungen auf den dort gerade ablaufenden Prozeß CALLPₓ. Der Ausfall eines gerade im Ablauf befindlichen Prozesses hat wegen des Holdingprozedur zur Folge, daß das Kennzeichen der Quelle in der Holding Tabelle HT gesetzt bleibt und nicht mehr gelöscht wird. Dies würde bedeuten, daß alle Verbindungen, ausgehend von Teilnehmern die an der entsprechenden Quelle (Anschlußbaugruppe) angeschlossen sind, unterbrochen werden, weil die betreffenden Meldungen nicht mehr bearbeitet werden können. Um dies zu vermeiden sind im Betriebssystem Prozesse zur Zeitüberwachung implementiert. Diese Zeitüberwachungsprozesse aktualisieren in einem entsprechenden Rythmus die auf den Prozessoren P₁ ... Pₙ ablaufenden Prozesse CALLP₁ ... CALLPₙ. Im Zuge des Eintrags des Kennzeichens der Quelle sowie des Prozeßkennzeichens in die Holding Tabelle HT trägt der betreffende Prozeß CALLPₓ dann noch zusätzlich einen Zeitparameter ein. Der im Betriebssystem zur Zeitüberwachung implementierte Prozeß vergleicht diesen Zeitparameter mit vorgegebenen Sollwerten in einem festen Zeitrythmus und führt dann seinerseits das Löschen eines -wegen des Fehlverhaltens einer Einrichtung noch gesetzten und damit nicht gelöschten-Kennzeichens durch, womit die Bearbeitung der entsprechenden Meldungen wieder freigegeben ist.

## Patentansprüche

1. Verfahren zum Vermeiden von Nachrichtenüberholungen in einem Kommunikationssystem, das Anschlußbaugruppen (LTG₁.. ... LTGn) mit jeweils daran angeschlossenen Endgeräten sowie ein der zentralen Steuerung dienendes Multiprozessorsystem umfaßt, welches einen zentralen Systembus (B:CMY) aufweist, an den eine Mehrzahl von Prozessoren (P₁...Pₙ) angeschlossen ist, und welches ein mit dem zentralen. Systembus (B:CMY) ebenfalls verbundenes, für alle Einheiten des Multiprozessorsystems gemeinsames Speichersystem (CMY) aufweist, das zur Herstellung/Verwaltung von Verbindungen von Endgeräten wenigstens eine Eingabeliste (EL) beinhaltet, in der die für die Verbindungen relevanten Meldungen (M₁ ... Mₙ) zur weiteren Verarbeitung durch auf der Mehrzahl von Prozessoren (P₁ ... Pₙ) ablaufende Prozesse (CallP₁ ... CallPₙ) zwischengespeichert werden,
**dadurch gekennzeichnet**,
daß die Bearbeitung einer von einer der Anschlußbaugruppen (LTG₁ ... LTGₙ) stammenden und in der Eingabeliste (EL) abgelegten ersten Meldung (My) durch einen auf einem ersten Prozessor (P_{y}) ablaufenden ersten Prozeß (CallP_{y}) von einem auf einem zweiten Prozessor (Pₓ) ablaufenden, eine zweite Meldung (Mₓ) bearbeitenden zweiten Prozeß (CallPₓ) abhängig gemacht wird, wenn die erste und die zweite Meldung (Mₓ, M_{y}) von derselben Anschlußbaugruppe (LTG1 ... LTGn) stammen, indem der die zweite Meldung (Mₓ) bearbeitende zweite Prozeß (CallPₓ) in einer im gemeinsamen Speichersystem (CMY) angelegten Holding-Tabelle (HT) ein Kennzeichen dieser Anschlußbaugruppe (LTG₁ ... LTGₙ) vor Bearbeitungsbeginn der zweiten Meldung (Mₓ) hinterlegt und dieses erst bei Beendigung der Bearbeitung der zweiten Meldung (Mₓ) wieder löscht und der erste Prozeß (CallP_{y}) die Bearbeitung der ersten Meldung (M_{y}) erst dann aufnimmt,wenn zu diesem Zeitpunkt kein Eintrag des Kennzeichens derselben Anschlußbaugruppe (LTG₁...LTGₙ) in der Holding-Tabelle (HT) durch einen anderen Prozeß existiert.

2. Verfahren nach Anspruch 1,
**dadurch gekennzeichnet**,
daß ein in der Bearbeitung der ersten Meldung (M_{y}) verhinderter erster Prozeß (CallP_{y}) die Bearbeitung der in der Eingabeliste (EL) nächststehenden Meldung aufnimmt.

3. Verfahren nach Anspruch 1,
**dadurch gekennzeichnet**,
daß eine Zeitüberwachung der auf der Mehrzahl von Prozessoren (P₁ ... Pₙ) ablaufenden Prozesse (CallP₁ ... CallPₙ) implementiert ist, die ein automatisches Löschen des Kennzeichens in der Holding-Tabelle (HT) nach einer fest vorgegebenen Zeitspanne bewirkt.

4. Verfahren nach Anspruch 1,
**dadurch gekennzeichnet**,
daß durch exklusives Reservieren des zentralen Systembusses (B:CMY) für die Zeit des Zugriffs eines gerade aktivierten Prozesses (CallPₓ) auf die Holding-Tabelle (HT) ein gleichzeitiger Zugriff durch einen weiteren konkurrierenden, gerade aktivierten Prozess (CallP_{y}) verhindert wird.

5. Verfahren nach Anspruch 1,
**dadurch gekennzeichnet**,
daß eine Leseprozedur/Schreibprozedur zum Lesen/Schreiben der relevanten Meldungen (M₁ ... Mₙ) in die Eingabeliste (EL) ein Lesezeichen (READ-INDEX)/Schreibzeichen (WRITE-INDEX) verwendet und die Leseprozedur derart gesteuert ist, daß das Lesezeichen (READ-INDEX) die durch die Holding-Prozedur entstandenen Lücken in der Eingabeliste (EL) überspringt.

## Claims

1. Method for the avoidance of information repetitions in a communications system which comprises line trunk groups (LTG₁.....LTGₙ) having terminals, which are in each case connected thereto, as well as a multi-processor system which is used for central control and has a central system bus (B:CMY) to which a plurality of processors (P₁...Pₙ) are connected, and which has a memory system (CMY) which is likewise connected to the central system bus (B:CMY), is common to all the units of the multi-processor system and contains at least one input list (EL) for the production/control of connections of terminals, in which input list (EL) those messages (M₁ ... Mₙ) which are relevant for the connections are buffer-stored for further processing by processes (CallP₁ ... CallPₙ) which run on the plurality of processors (P₁ ... Pₙ), characterized in that the processing of a first message (My) which originates from one of the line trunk groups (LTG₁ ... LTGₙ) and is stored in the input list (EL), by means of a first process (CallP_{y}) which runs on a first processor (P_{y}), is made dependent on a second process (CallPₓ) which runs on a second processor (Pₓ) and processes a second message; (Mₓ) when the first message (Mₓ) and the second message (Mₓ) originate from the same line trunk group (LTG₁ ... LTGₙ), in that, before starting to process the second message (Mₓ), the second process (CallPₓ), which processes the second message (Mₓ), stores an identification of this line trunk group (LTG₁ ... LTGₙ) in a holding table (HT) which is placed in the common memory system (CMY) and does not delete this identification again until the processing of the second message (Mₓ) has been completed, and the first process (CallP_{y}) does not start the processing of the first message (M_{y}) until, at this time, no entry of the identification of the same line trunk group (LTG₁ ... LTGₙ) exists in the holding table (HT) as the result of another process.

2. Method according to Claim 1, characterized in that a first process (CallP_{y}) which is prevented in the processing of the first message (M_{y}) starts the processing of the next message in the input list (EL).

3. Method according to Claim 1, characterized in that a time monitor is implemented for the processes (CallP₁ ... CallPₙ) which run on the plurality of processors (P₁ ... Pₙ), which time monitor results in the identification in the holding table (HT) being automatically deleted after a specifically predetermined time interval.

4. Method according to Claim 1, characterized in that simultaneous access by a further competing process (CallP_{y}), which has just been activated, is prevented by exclusive reservation of the central system bus (B:CMY) for the time of access of a process (CallPₓ), which has just been activated, to the holding table (HT).

5. Method according to Claim 1, characterized in that a read procedure/write procedure for reading/writing relevant messages (M₁ ... Mₙ) into the input list (EL) uses a read character (READ-INDEX)/write character (WRITE-INDEX) and the read procedure is controlled in such a manner that the read character (READ-INDEX) jumps over those gaps in the input list (EL) which result from the holding procedure.

## Revendications

1. Procédé destiné à empêcher que des informations se répètent dans un système de communication, qui comprend des groupes (LTG₁ à LTGₙ) de raccordement ayant chacun des terminaux, qui leur sont raccordés, ainsi qu'un système à processeur multiple destiné à la commande centrale, qui comporte un bus central (B : CMY) de système et une pluralité de processeurs (P₁ à Pₙ) étant connectés à ce bus central de système, et qui comporte un système (CMY) de mémoire relié également au bus (B : CMY) central de système, commun à toutes les unités du système à processeur multiple et comprenant au moins une liste (EL) d'introduction pour l'établissement/la gestion de liaisons de terminaux, les messages (M₁ à Mₙ) importants pour les liaisons et destinés au traitement postérieur étant mémorisés temporairement dans la liste (EL) d'introduction par des processus (CallP₁ à CallPₙ) se déroulant sur la pluralité de processeurs (P₁ à Pₙ),
caractérisé en ce que,
on rend dépendant le traitement d'un premier message (My) provenant de l'un des groupes (LTG₁ à LTGₙ) de raccordement et enregistré dans la liste (EL) d'introduction, par un premier processus (CallP_{y}) se déroulant sur un premier processeur (P_{y}), d'un second processus (CallPₓ) se déroulant sur un second processeur (Pₓ) et traitant un second message (Mₓ), lorsque les premier et second messages (M_{y}) proviennent du même groupe (LTG₁ à LTGₙ) de raccordement, par le fait que le second processus (CallPₓ) traitant le second message (Mₓ) enregistre dans un tableau (HT) de maintien mis en oeuvre dans le système (CMY) commun de mémoire une caractéristique de ce groupe (LTG₁ à LTGₙ) de raccordement avant le début du traitement du second message (Mₓ) et n'efface de nouveau cette caractéristique que lorsque le traitement du second message (Mₓ) est terminé et par le fait que le premier processus (CallP_{y}) ne prend en charge le traitement du premier message (M_{y}) que si à cet instant il n'y a aucune introduction de la caractéristique du même groupe (LTG₁ à LTGₙ) du raccordement dans le tableau (HT) de maintien par un autre processus.

2. Procédé suivant la revendication 1, caractérisé en ce qu'un premier processus (CallP_{y}) inhibé pendant le traitement du premier message (M_{y}) prend en charge le traitement du prochain message présent dans la liste (EL) d'introduction.

3. Procédé suivant la revendication 1, caractérisé en ce qu'un contrôle temporel des processus (CallP₁ à CallPₙ) se déroulant sur la pluralité des processeurs (P₁ à Pₙ) est mis en oeuvre, ce contrôle temporel provoquant un effacement automatique de la caractéristique dans le tableau (HT) de maintien après une durée prescrite de manière fixe.

4. Procédé suivant la revendication 1, caractérisé en ce que l'on empêche, en réservant de manière exclusive le bus (B : CMY) central de système pendant le temps de l'accès d'un processus (CallPₓ) justement activé au tableau (HT) de maintien, un accès simultané par un autre processus (CallP_{y}) justement activé et concurrent.

5. Procédé suivant la revendication 1, caractérisé en ce qu'une procédure de lecture/procédure d'écriture destinée à la lecture/écriture des messages (M₁ à Mₙ) importants dans la liste (EL) d'introduction utilise un signe (READ-INDEX) de lecture/ (WRITE- INDEX) d'écriture et la procédure de lecture est commandée de telle sorte que le signe (READ-INDEX) de lecture saute les vides engendrés par la procédure de maintien dans la liste (EL) d'introduction.
